# EUROPEAN PATENT APPLICATION

(11) **EP 4 354 684 A1**
(43) Date of publication of application: **17.04.2024**
(21) Application number: 22819951.9
(22) Date of filing: 14.04.2022
(51) Int. Cl.: H02H 3/087, H02H 7/18, B60R 16/02, B60L 3/04, H02J 7/00, B60L 50/60, B60L 58/10, H02J 1/00

(54) **CUTOFF DEVICE FOR VEHICLE AND CUTOFF METHOD**

(30) Priority: 11.06.2021 JP 2021097671
(71) Applicant: Panasonic Intellectual Property Management Co., Ltd., Kadoma-shi, Osaka 571-0057 (JP)
(72) Inventor: IWAKI, Hideki, Kadoma-shi, Osaka 571-0057 (JP); SAITO, Shinya, Kadoma-shi, Osaka 571-0057 (JP); FURUKAWA, Mima, Kadoma-shi, Osaka 571-0057 (JP); KUMAZAWA, Kenjiro, Kadoma-shi, Osaka 571-0057 (JP); SADAYUKI, Eiichi, Kadoma-shi, Osaka 571-0057 (JP); FURUSE, Tomoaki, Kadoma-shi, Osaka 571-0057 (JP)
(74) Representative: Novagraaf International SA
(86) International application number: PCT/JP2022/017854
(87) International publication number: WO 2022/259764

(57) **Abstract**

An in-vehicle cutoff device includes a first input terminal, a first output terminal, a first conductor wire, a second input terminal, a second output terminal, a second conductor wire, a first current detector capable of detecting a current flowing through the first conductor wire or the second conductor wire, a second current detector capable of detecting a current flowing through the first conductor wire or the second conductor wire, a pyrotechnic circuit breaker capable of irreversibly disconnecting the first conductor wire, and controller capable of controlling a cutoff operation of the pyrotechnic circuit breaker in response to the detected currents. The controller causes the cutoff operation of the pyrotechnic circuit breaker to perform the cutoff operation when both of a first current value generated based on a first detection signal and a second current value generated based on the second detection signal exceed an overcurrent threshold.

## Description

### TECHNICAL FIELD

The present invention relates to an in-vehicle cutoff device and a cutoff method used in various vehicles.

### BACKGROUND ART

A conventional cutoff device will be explained below. Conventional cutoff devices includes a pyrotechnic switch connected between a battery and a load, and a control circuit for controlling the pyrotechnic switch. The control circuit detects the current being supply from the battery to the load, and the condition of the vehicle, and drives to ignite the pyrotechnic switch depending on the current and the condition of the vehicle.

As prior art document information related to the invention according to this application, Patent Document 1 is known, for example.

### Citation List

### Patent Literature

PTL 1: JP 7-059202 A

### SUMMARY OF THE INVENTION

In such a conventional cutoff device, however, when an overcurrent condition needing a cutoff operation is detected in the current flowing from the battery to the load, and it is determined that the pyrotechnic switch needs to be driven and ignited, for example, it has been not possible to determine whether such an operation of making a detection related to an overcurrent is appropriate or erroneous. For this reason, the control circuit sometimes ended up detecting and determining that an overcurrent has occurred and drives to ignite the pyrotechnic switch, although actually no overcurrent has occurred; or detecting and determining that no overcurrent has occurred and fails to drive to ignite the pyrotechnic switch, although an overcurrent has actually occurred. As a result, reliability of the operation of the cutoff device might deteriorate, disadvantageously.

Therefore, an object of the present invention is to improve the reliability of cutoff-related operations.

In order to achieve this object, the present invention is characterized by an in-vehicle cutoff device including: a first input terminal to which direct-current (DC) power of a first polarity is supplied; a first output terminal; a first conductor wire connecting the first input terminal and the first output terminal; a second input terminal to which DC power having a second polarity opposite to the first polarity is supplied; a second output terminal; a second conductor wire connecting the second input terminal and the second output terminal; a first current detector configured to detect a current flowing through the first conductor wire or the second conductor wire; a second current detector configured to detect a current flowing through the first conductor wire or the second conductor wire; a pyrotechnic circuit breaker configured to irreversibly disconnect the first conductor wire; and a controller configured to receive a first detection signal transmitted from the first current detector and a second detection signal transmitted from the second current detector, the first detection signal corresponding to the current detected by the first current detector, the second detection signal corresponding to the current detected by the second current detector, the cutoff controller configured to control a cutoff operation of the pyrotechnic circuit breaker, in which the controller causes the cutoff operation of the pyrotechnic circuit breaker to perform the cutoff operation when both of a first current value generated based on the first detection signal and a second current value generated based on the second detection signal exceed an overcurrent threshold.

According to the present invention, it is possible to activate the cutoff operation based on an overcurrent detected using a plurality of current detectors, so that the reliability of the operation of the in-vehicle cutoff device can be improved.

### BRIEF DESCRIPTION OF THE DRAWINGS

Fig. 1 is a first circuit block diagram illustrating a configuration of an in-vehicle cutoff device according to an exemplary embodiment of the present invention.
Fig. 2 is a second circuit block diagram illustrating a configuration of the in-vehicle cutoff device according to the exemplary embodiment of the present invention.
Fig. 3 is a third circuit block diagram illustrating a configuration of the in-vehicle cutoff device according to the exemplary embodiment of the present invention.
Fig. 4 is a fourth circuit block diagram illustrating a configuration of the in-vehicle cutoff device according to the exemplary embodiment of the present invention.
Fig. 5 is a fifth circuit block diagram illustrating a configuration of the in-vehicle cutoff device according to the exemplary embodiment of the present invention.

### DESCRIPTION OF EMBODIMENT

An exemplary embodiment of the present invention will now be explained with reference to some drawings.

### (Exemplary embodiment)

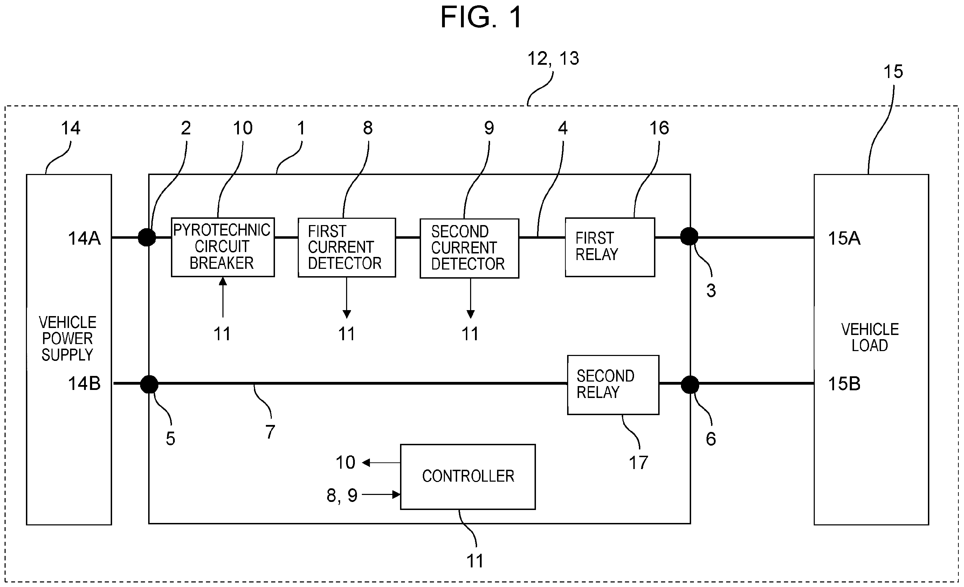

Fig. 1 is a first circuit block diagram illustrating a configuration of in-vehicle cutoff device 1 according to the exemplary embodiment of the present invention. In-vehicle cutoff device 1 includes first input terminal 2, first output terminal 3, first conductor wire 4, second input terminal 5, second output terminal 6, second conductor wire 7, first current detector 8, second current detector 9, pyrotechnic circuit breaker 10, and controller 11.

DC power at a first polarity is supplied to first input terminal 2. First conductor wire 4 connects first input terminal 2 and first output end 3. DC power having a second polarity opposite to the first polarity is supplied to second input terminal 5. Second conductor wire 7 connects second input terminal 5 and second output terminal 6.

First current detector 8 can detect a current flowing through first conductor wire 4 or second conductor wire 7. Second current detector 9 can detect a current flowing through first conductor wire 4 or second conductor wire 7. Pyrotechnic circuit breaker 10 is disposed in a manner enabled to irreversibly disconnect first conductor wire 4. Controller 11 can receive first detection signal S1 and second detection signal S2. First detection signal S1 is transmitted from first current detector 8 correspondingly to a current detected thereby, and second detection signal S2 is transmitted from second current detector 9 correspondingly to a current detected thereby. Controller 11 can also control a cutoff operation of pyrotechnic circuit breaker 10.

Controller 11 causes pyrotechnic circuit breaker 10 to perform the cutoff operation when first current value I1 generated based on first detection signal S1 and second current value I2 generated based on second detection signal S2 both exceed overcurrent threshold value Ith.

With the above configuration and operation, an overcurrent can be detected using the plurality of current detectors that are first current detector 8 and second current detector 9, and a cutoff operation can be activated based on the plurality of detection results. As a result, the reliability of the operation of in-vehicle cutoff device 1 can be improved.

In-vehicle cutoff device 1 will now be described in detail. As mentioned above, in-vehicle cutoff device 1 includes first input terminal 2, first output terminal 3, first conductor wire 4, second input terminal 5, second output terminal 6, second conductor wire 7, first current detector 8, second current detector 9, pyrotechnic circuit breaker 10, and controller 11.

In-vehicle cutoff device 1 is disposed on vehicle body 13 of vehicle 12. Vehicle power supply 14 and vehicle load 15 are disposed on vehicle body 13. Vehicle power supply 14 is a power supply mainly used for propelling and driving vehicle 12, and a lithium battery is used as an electricity storage element, as an example. Vehicle load 15 is a load mainly for propelling and driving vehicle 12, and vehicle load 15 mainly corresponds to a part or all of an inverter device (not illustrated) that converts DC power supplied from vehicle power supply 14 into three-phase AC power, and a motor (not illustrated) driven by three-phase AC power supplied by the inverter device (not illustrated).

In-vehicle cutoff device 1 is connected to vehicle power supply 14 and vehicle load 15. First electrode 14A of vehicle power supply 14 is connected to first input terminal 2. Second electrode 14B of vehicle power supply 14 is connected to second input terminal 5. First electrode 14A is a positive electrode, and second electrode 14B is a negative electrode. First electrode 15A of vehicle load 15 is connected to first output terminal 3. Second electrode 15B of vehicle load 15 is connected to second output terminal 6.

First conductor wire 4 connects first input terminal 2 and first output terminal 3. Second conductor wire 7 connects second input terminal 5 and second output terminal 6. First current detector 8 is provided to detect a current flowing through first conductor wire 4. Second current detector 9 is provided to detect the current flowing through first conductor wire 4. Pyrotechnic circuit breaker 10 is disposed in a manner enabled to irreversibly disconnect first conductor wire 4 that is on a positive potential side.

Controller 11 can receive first detection signal S1 and second detection signal S2. First detection signal S1 is transmitted from first current detector 8 correspondingly to a current flowing through first conductor wire 4 and detected thereby, and second detection signal S2 is transmitted from second current detector 9 correspondingly to the current detected thereby. Controller 11 can also control a cutoff operation of pyrotechnic circuit breaker 10.

Hereinafter, the step of causing first current detector 8 to generate first detection signal S1 will be referred to as a first current detection step. Hereinafter, the step of causing second current detector 9 to generated second detection signal S2 will be referred to as a second current detection step.

Controller 11 may be a functional element including all of a calculation function for determining first current I1 based on first detection signal S1 and determining second current I2 based on second detection signal S2, a storage function for storing therein the calculation results, a function for issuing a command to pyrotechnic circuit breaker 10, and the like. Furthermore, these functions of controller 11 may be provided as a single element or may be provided as a plurality of distributed elements.

Hereinafter, the step of determining first current I1 based on first detection signal S 1 and the step of determining second current I2 based on second detection signal S2 will be referred to as a calculation step.

First detection signal S 1 transmitted from first current detector 8 and second detection signal S2 transmitted from second current detector 9 may be analog data signals output from a shunt resistor or a Hall element, or may be digital data signals generated processing and digitally converting the analog signals output from the shunt resistor or the Hall element.

With a detection method using shunt resistors as first current detector 8 and second current detector 9, currents can be detected highly accurately. A shunt resistor is preferably used to detect a current in linear first conductor wire 4 or second conductor wire 7 where parasitic inductance is rarely generated, or to detect a current in shorter one of first conductor wire 4 and second conductor wire 7, in the comparison between first conductor wire 4 and second conductor wire 7.

In addition, with a detection method using Hall elements as first current detector 8 and second current detector 9, current can be detected highly responsively. Therefore, a shunt resistor or a Hall element may be used as first current detector 8 or second current detector 9 selectively, depending on the characteristics required in the current detections.

Furthermore, first relay 16 is provided on first conductor wire 4 on the positive potential side. First relay 16 then supplies the power or disconnect the power from vehicle power supply 14 to vehicle load 15, in response to a command from controller 11. In the same manner, second relay 17 is provided on second conductor wire 7 that is on the negative potential side. Second relay 17 then supplies the power or disconnects the power from vehicle power supply 14 to vehicle load 15, in response to a command from controller 11.

Controller 11 causes pyrotechnic circuit breaker 10 to perform the cutoff operation when first current value I1 generated based on first detection signal S 1 and second current value I2 generated based on second detection signal S2 both exceed overcurrent threshold value Ith. Hereinafter, the step of causing pyrotechnic circuit breaker 10 to execute the cutoff operation when both first current value I1 and second current value I2 exceed overcurrent threshold Ith will be referred to as a cutoff step.

With the above configuration and operation, an overcurrent can be detected using the plurality of current detectors that are first current detector 8 and second current detector 9, and a cutoff operation can be activated based on the plurality of detection results. Furthermore, when both first current detector 8 and second current detector 9 detect an overcurrent, controller 11 determines that the overcurrent has occurred. With this, it is possible to increase the probability at which the detected current flowing through first conductor wire 4 is an overcurrent, so that controller 11 can correctly determine that an overcurrent has occurred. As a result, the reliability of the operation of in-vehicle cutoff device 1 can be improved.

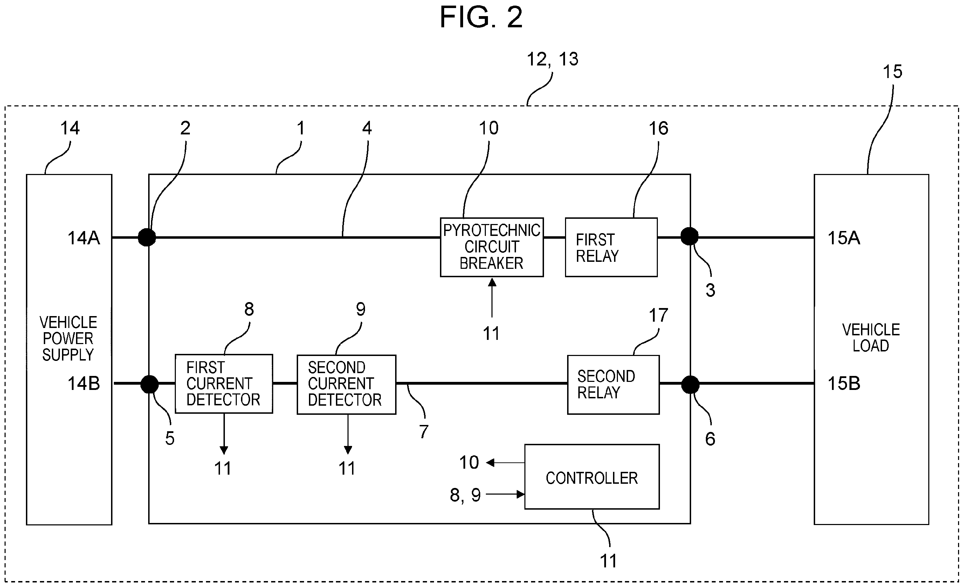

As illustrated in Fig. 2 that is a second circuit block diagram illustrating a configuration of in-vehicle cutoff device 1 according to the exemplary embodiment of the present invention, first current detector 8 is provided to detect the current flowing through second conductor wire 7. Second current detector 9 is provided to detect the current flowing through second conductor wire 7.

In particular, in the example herein, both first current detector 8 and second current detector 9 detect the current flowing through second conductor wire 7 that is a conductor wire having a negative potential, and then controller 11 makes the determination based on first current value I1 and second current value I2. In this manner, first current detector 8 and second current detector 9 are disposed on second conductor wire 7, and pyrotechnic circuit breaker 10 is disposed on first conductor wire 4, in a separate manner. Therefore, it is possible to keep the lengths of the conductors used in first conductor wire 4 and second conductor wire 7 short.

As a result, it is possible to suppress parasitic inductance and impedance generated on first conductor wire 4 and second conductor wire 7, and the accuracy of the current detection at the time of a sudden change the current can be improved. In this manner, the reliabilities of the operations of in-vehicle cutoff device 1 and pyrotechnic circuit breaker 10 are improved. In addition, because the impedance balance between first conductor wire 4 and second conductor wire 7 can be better ensured, it is possible to suppress common mode noise caused by ripples or noise in the current flowing through first conductor wire 4 and second conductor wire 7. As a result, the accuracies of the current detection of first current detector 8 and second current detector 9 are improved, and therefore, reliabilities of the operation of in-vehicle cutoff device 1 and pyrotechnic circuit breaker 10 are improved.

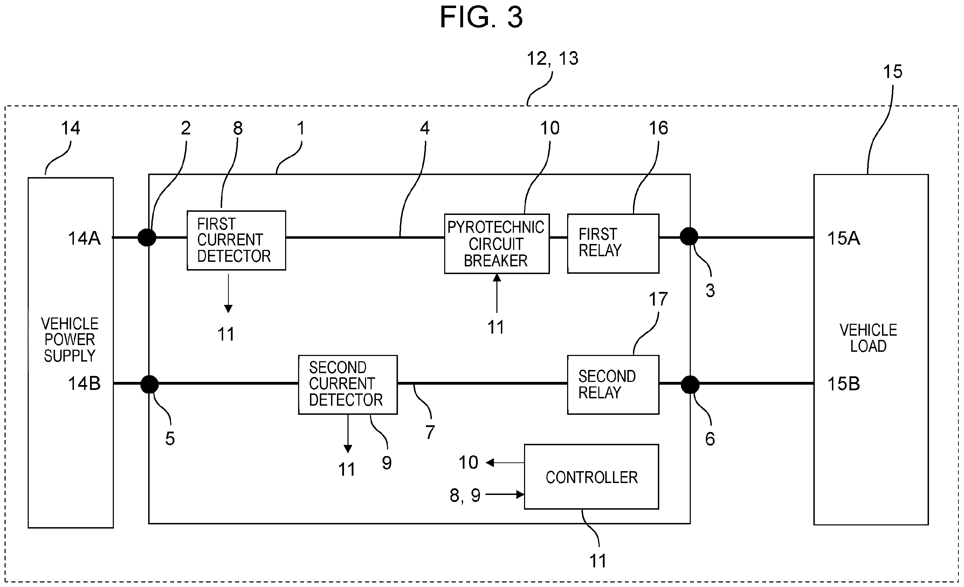

As illustrated in Fig. 3 that is a third circuit block diagram illustrating a configuration of in-vehicle cutoff device 1 according to the exemplary embodiment of the present invention, first current detector 8 is provided to detect the current flowing through first conductor wire 4. Second current detector 9 is provided to detect the current flowing through second conductor wire 7.

In particular, in the example herein, first current detector 8 detects a current flowing through first conductor wire 4 that is a conductor wire with a positive potential, and second current detector 9 detects a current flowing through second conductor wire 7 that is a conductor wire with a negative potential, and then controller 11 makes the determination based on first current value I1 and second current value I2. As a result, the effect of the common mode noise from vehicle load 15 is suppressed, so that the reliabilities of the operation of in-vehicle cutoff device 1 and the operation of pyrotechnic circuit breaker 10 can be improved.

In this example, first current detector 8 detects a current flowing through first conductor wire 4 that is a positive potential conductor wire, and second current detector 9 detects a current flowing through second conductor wire 7 that is a negative potential conductor wire. Therefore, first detection signal S1 and second detection signal S2 cancel out the in-phase noise caused by the noise generated in vehicle load 15 such as the inverter circuit. In this manner, the noise in the detected first current value I1 and second current value I2 can be reduced. As a result, first detection signal S 1 output from first current detector 8 and second detection signal S2 output from second current detector 9 become highly reliable signals, therefore, the reliabilities of the operation of in-vehicle cutoff device 1 and the operation of pyrotechnic circuit breaker 10 are improved.

Furthermore, first current detector 8 and second current detector 9 execute the current detector based on the potential difference of the shunt resistor. The effect of the parasitic inductance is then reduced by setting different resistance values to first current detector 8 and second current detector 9, respectively, and by calculating a difference in the values detected by first current detector 8 and second current detector 9. As a result, it becomes possible to detect an overcurrent that goes through a particularly large change per unit at a higher accuracy, and therefore, the reliabilities of the operation of in-vehicle cutoff device 1 and the operation of pyrotechnic circuit breaker 10 is improved. In the above description, controller 11 determines that an overcurrent has occurred when both first current detector 8 and second current detector 9 detects the overcurrent. However, it is also possible for controller 11 to determine that the overcurrent has occurred when at least one of first current detector 8 and second current detector 9 detects the overcurrent. Therefore, when the current to be detected flowing through first conductor wire 4 is an overcurrent, controller 11 can determine that the overcurrent has occurred at the point in time at which more responsive one of first current detector 8 and second current detector 9 has detected the overcurrent. As a result, the reliability of the operation of in-vehicle cutoff device 1 can be improved.

At this time, first current detector 8 can detect the current flowing through first conductor wire 4 or second conductor wire 7. Second current detector 9 can detect a current flowing through first conductor wire 4 or second conductor wire 7. In particular, as illustrated in Fig. 1, both first current detector 8 and second current detector 9 detect a current flowing through first conductor wire 4 that is a conductor wire having a positive potential, and then controller 11 makes the determination based on first current value I1 and second current value I2.

As a result, even when any one of first current detector 8 and second current detector 9 fails, the overcurrent can be detected by operative one of first current detector 8 and second current detector 9. Therefore, the safety of the operation in case of a failure of any one of first current detector 8 and second current detector 9 can be improved. Furthermore, a highly reliable detection function can be implemented, without causing a deteriorating in the failure rate of the current detection function of entire in-vehicle cutoff device 1.

As one example of a failure of the current detection function, the current detection function may fall into an overcurrent state mode failure, in which first current detector 8 or second current detector 9 erroneously recognizes that an overcurrent exceeding the overcurrent threshold value Ith is detected, and outputs such first detection signal S1 or second detection signal S2. As a result, first current detector 8 or second current detector 9 fails to detect the overcurrent correctly and malfunctions. However, by using the configuration and operation described above, operative one of first current detector 8 and second current detector 9 can maintain the current detection function.

As a result, the reliability of the operation of in-vehicle cutoff device 1, particularly that of pyrotechnic circuit breaker 10, is improved. Even when either first current detector 8 or second current detector 9 outputs a false detection signal as first detection signal S1 or second detection signal S2, as a result of being affected by the noise generated inside and outside in-vehicle cutoff device 1, the effect of the noise can be suppressed, and false ignition of pyrotechnic circuit breaker 10 can be prevented, unless the noise gets into both of first current detector 8 and second current detector 9 simultaneously. In other words, by using different current detection schemes such as a shunt resistor and a Hall element, first current detector 8 and second current detector 9 can be ensured with different characteristics with respect to noise, so that the effect of noise in in-vehicle cutoff device 1 can be alleviated.

Furthermore, it is also possible, as illustrated in Fig. 2, for both first current detector 8 and second current detector 9 to detect the current flowing through second conductor wire 7 that is the conductor wire having a negative potential, and for controller 11 to make the determination based on first current value I1 and second current value I2.

Furthermore, it is also possible, as illustrated in Fig. 3, for first current detector 8 to detect the current flowing through first conductor wire 4 that is a conductor wire with a positive potential; for second current detector 9 to detect the current flowing through second conductor wire 7 that is a conductor wire with a negative potential; and for controller 11 to make the determination based on first current value I1 and second current value I2.

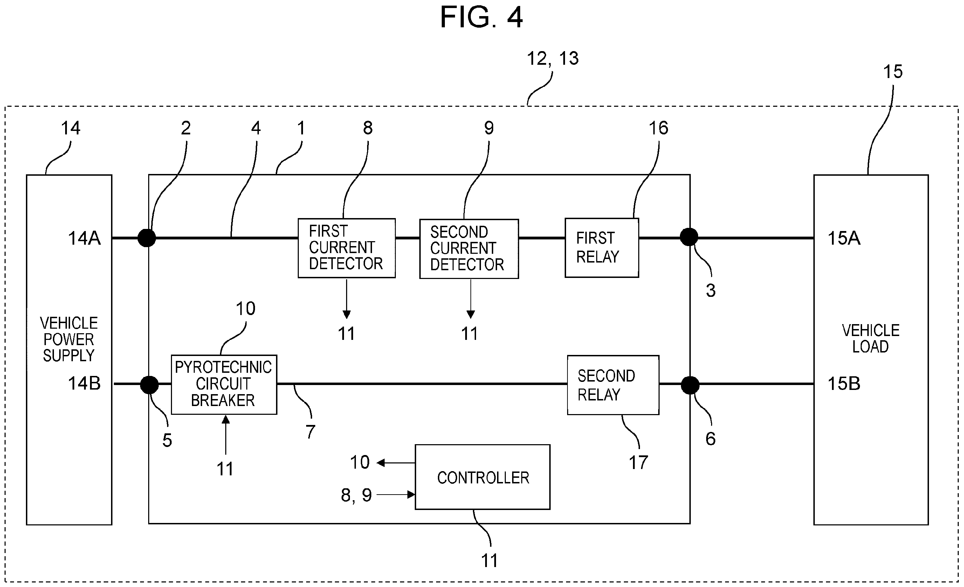

In the above description, pyrotechnic circuit breaker 10 is disposed in a manner enabled to irreversibly disconnect first conductor wire 4 that is on the positive potential side. At this time, as illustrated in in Fig. 4 that is a fourth circuit block diagram illustrating a configuration of in-vehicle cutoff device 1 according to the exemplary embodiment of the present invention, pyrotechnic circuit breaker 10 may be disposed to irreversibly disconnect second conductor wire 7 that is on the negative potential side.

In this example, it is possible to detect an overcurrent using a plurality of current detectors including first current detector 8 and second current detector 9, and to activate the cutoff operation based on a plurality of detection results. Furthermore, when both first current detector 8 and second current detector 9 detect an overcurrent, controller 11 determines that the overcurrent has occurred. With this, it is possible to increase the probability at which the detected current flowing through first conductor wire 4 is an overcurrent, so that controller 11 can correctly determine that an overcurrent has occurred. As a result, the reliability of the operation of in-vehicle cutoff device 1 can be improved.

In particular, both first current detector 8 and second current detector 9 detect the current flowing through first conductor wire 4 that is a positive potential conductor wire, and then controller 11 performs the determination based on first current value I1 and second current value I2. As a result, first current detector 8, second current detector 9, and pyrotechnic circuit breaker 10 are arranged dispersedly on second conductor wire 7 and first conductor wire 4. In this manner, conductor lengths of first conductor wire 4 and second conductor wire 7 can be kept short.

As a result, it is possible to suppress parasitic inductance and impedance generated on first conductor wire 4 and second conductor wire 7, and the accuracy of the current detection at the time of a sudden change the current can be improved. In this manner, the reliabilities of the operations of in-vehicle cutoff device 1 and pyrotechnic circuit breaker 10 are improved. In addition, because the impedance balance between first conductor wire 4 and second conductor wire 7 can be better ensured, it is possible to suppress common mode noise caused by ripples or noise in the current flowing through first conductor wire 4 and second conductor wire 7. As a result, the accuracies of the current detection of first current detector 8 and second current detector 9 are improved, and therefore, reliabilities of the operation of in-vehicle cutoff device 1 and pyrotechnic circuit breaker 10 are improved.

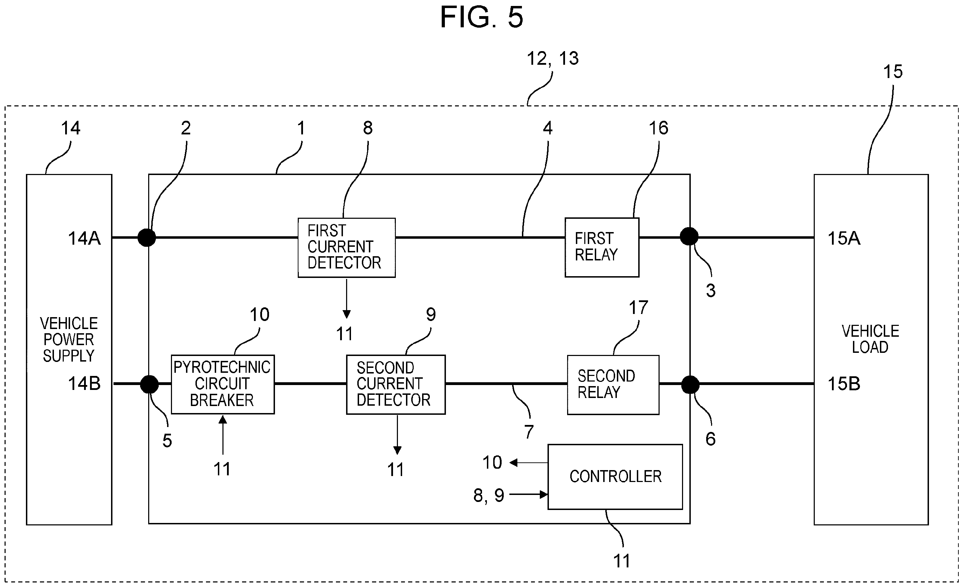

As illustrated in Fig. 5 that is a fifth circuit block diagram illustrating a configuration of in-vehicle cutoff device 1 according to the exemplary embodiment of the present invention, pyrotechnic circuit breaker 10 is also disposed to irreversibly disconnect second conductor wire 7 that is on the negative potential side; first current detector 8 detects the current flowing through first conductor wire 4 that is the positive potential side conductor wire; and second current detector 9 detects the current flowing through second conductor wire 7 that is the negative potential side conductor wire. Controller 11 then makes the determination based on first current value I1 and second current value I2. As a result, the effect of the common mode noise from vehicle load 15 is suppressed, so that the reliabilities of the operation of in-vehicle cutoff device 1 and the operation of pyrotechnic circuit breaker 10 can be improved.

In this example, first current detector 8 detects a current flowing through first conductor wire 4 that is a positive potential conductor wire, and second current detector 9 detects a current flowing through second conductor wire 7 that is a negative potential conductor wire. For this reason, in-phase noise generated in vehicle load 15 such as an inverter circuit is canceled out. Therefore, it is possible to suppress in-phase noise. As a result, first detection signal S1 output from first current detector 8 and second detection signal S2 output from second current detector 9 become highly reliable signals, therefore, the reliabilities of the operation of in-vehicle cutoff device 1 and the operation of pyrotechnic circuit breaker 10 are improved.

Furthermore, first current detector 8 and second current detector 9 execute the current detector based on the potential difference of the shunt resistor. The effect of the parasitic inductance is then reduced by setting different resistance values to first current detector 8 and second current detector 9, respectively, and by calculating a difference in the values detected by first current detector 8 and second current detector 9. As a result, it becomes possible to detect an overcurrent that goes through a particularly large change per unit at a higher accuracy, and therefore, the reliabilities of the operation of in-vehicle cutoff device 1 and the operation of pyrotechnic circuit breaker 10 is improved.

### INDUSTRIAL APPLICABILITY

The in-vehicle cutoff device according to the present invention has an effect of improving the reliability of cutoff-related operations, and is useful in various vehicles.

### REFERENCE MARKS IN THE DRAWINGS

1: in-vehicle cutoff device
2: first input terminal
3: first output terminal
4: first conductor wire
5: second input terminal
6: second output terminal
7: second conductor wire
8: first current detector
9: second current detector
10: pyrotechnic circuit breaker
11: controller
12: vehicle
13: vehicle body
14: vehicle power supply
14A: first electrode
14B: second electrode
15: vehicle load
15A: first electrode
15B: second electrode
16: first relay
17: second relay

## Claims

1. An in-vehicle cutoff device comprising:
a first input terminal to which direct-current (DC) power of a first polarity is supplied;
a first output terminal;
a first conductor wire connecting the first input terminal and the first output terminal;
a second input terminal to which DC power having a second polarity opposite to the first polarity is supplied;
a second output terminal;
a second conductor wire connecting the second input terminal and the second output terminal;
a first current detector configured to detect a current flowing through the first conductor wire or the second conductor wire;
a second current detector configured to detect a current flowing through the first conductor wire or the second conductor wire;
a pyrotechnic circuit breaker configured to irreversibly disconnect the first conductor wire; and
a cutoff controller configured to receive a first detection signal transmitted from the first current detector and a second detection signal transmitted from the second current detector, the first detection signal corresponding to the current detected by the first current detector, the second detection signal corresponding to the current detected by the second current detector, the cutoff controller configured to control a cutoff operation of the pyrotechnic circuit breaker, wherein
the cutoff controller causes the cutoff operation of the pyrotechnic circuit breaker to perform the cutoff operation when both of a first current value generated based on the first detection signal and a second current value generated based on the second detection signal exceed an overcurrent threshold.

2. The in-vehicle cutoff device according to Claim 1, wherein both the first current detector and the second current detector are configured to detect the current flowing through the first conductor wire.

3. The in-vehicle cutoff device according to Claim 1, wherein both the first current detector and the second current detector is configured to detect the current flowing through the second conductor wire.

4. The in-vehicle cutoff device according to Claim 1, wherein the first current detector is configured to detect the current flowing through the first conductor wire, and the second current detector is configured to detect the current flowing through the second conductor wire.

5. An in-vehicle cutoff device comprising:
a first input terminal to which DC power of a first polarity is supplied;
a first output terminal;
a first conductor wire connecting the first input terminal and the first output terminal;
a second input terminal to which DC power having a second polarity opposite to the first polarity is supplied;
a second output terminal;
a second conductor wire connecting the second input terminal and the second output terminal;
a first current detector configured to detect a current flowing through the first conductor wire or the second conductor wire;
a second current detector configured to detect a current flowing through the first conductor wire or the second conductor wire;
a pyrotechnic circuit breaker configured to irreversibly disconnect the first conductor wire; and
a cutoff controller configured to receive a first detection signal transmitted from the first current detector and a second detection signal transmitted from the second current detector, the first detection signal corresponding to the current detected by the first current detector, the second detection signal corresponding to the current detected by the second current detector, the cutoff controller configured to control a cutoff operation of the pyrotechnic circuit breaker, wherein
the cutoff controller causes the cutoff operation of the pyrotechnic circuit breaker to perform the cutoff operation when at least one of a first current value generated based on the first detection signal and a second current value generated based on the second detection signal exceeds an overcurrent threshold.

6. The in-vehicle cutoff device according to Claim 5, wherein both the first current detector and the second current detector are configured to detect the current flowing through the first conductor wire.

7. An in-vehicle cutoff device comprising:
a first input terminal to which DC power of a first polarity is supplied;
a first output terminal;
a first conductor wire connecting the first input terminal and the first output terminal;
a second input terminal to which DC power having a second polarity opposite to the first polarity is supplied;
a second output terminal;
a second conductor wire connecting the second input terminal and the second output terminal;
a first current detector configured to detect a current flowing through the first conductor wire or the second conductor wire;
a second current detector configured to detect a current flowing through the first conductor wire or the second conductor wire;
a pyrotechnic circuit breaker configured to irreversibly disconnect the second conductor wire; and
a cutoff controller configured to receive a first detection signal transmitted from the first current detector and a second detection signal transmitted from the second current detector, the cutoff controller configured to control a cutoff operation of the pyrotechnic circuit breaker, wherein
the cutoff controller caused the cutoff operation of the pyrotechnic circuit breaker to perform the cutoff operation when both of a first current value generated based on the first detection signal and a second current value generated based on the second detection signal exceed an overcurrent threshold.

8. The in-vehicle cutoff device according to Claim 7, wherein both the first current detector and the second current detector are configured to detect the current flowing through the first conductor wire.

9. The in-vehicle cutoff device according to Claim 7, wherein the first current detector is configured to detect the current flowing through the first conductor wire, and the second current detector is configured to detect the current flowing through the second conductor wire.

10. A cutoff method according to a cutoff device,
the cutoff device including:
a first input to which DC power of a first polarity is supplied;
a first output;
a first conductor wire connecting the first input and the first output; and
a second input to which DC power having a second polarity opposite to the first polarity is supplied;
a second output; and
a second conductor wire connecting the second input and the second output;
the cutoff method comprising:
a first current detection step of detecting a current flowing through the first conductor wire or the second conductor wire;
a second current detection step of detecting a current flowing through the first conductor wire or the second conductor wire;
a calculation step of calculating a first current value based on a first detection signal and a second current value based on a second detection signal, respectively, the first signal and the second detecting signal generated in the first current detection step and the second current detection step, and
a cutoff step of irreversibly disconnecting the first conductor when both the first current value and the second current value exceed an overcurrent threshold.
